# EUROPEAN PATENT APPLICATION

(11) **EP 1 867 592 A1**
(43) Date of publication of application: **19.12.2007**
(21) Application number: 06115611.3
(22) Date of filing: 16.06.2006
(51) Int. Cl.: B65G 51/03

(54) **Air conveyor**

(71) Applicant: SACMI COOPERATIVA MECCANICI IMOLA SOCIETA' COOPERATIVA, 40026 Imola (BO) (IT)
(72) Inventor: Contoli, Piercarlo, 48018 Faenza (RA) (IT); Sallioni, Andrea, 40062 Molinella (BO) (IT)
(74) Representative: Luppi, Luigi

(57) **Abstract**

An apparatus for conveying objects (2) comprising conveying plane means arranged for supporting said objects (2) and blowing means (12; 19) arranged for advancing said objects (2) in an advancing direction (F), said conveying plane means being selected from a group comprising rolling means (7), fluid cushion means.

## Description

The invention relates to an apparatus for conveying objects, in particular for conveying caps that are obtained for example by moulding plastics, or by forming metal sheets.

An apparatus for conveying caps is known that is arranged downstream of a moulding station and that comprises a U-shaped channel element along which the caps that are removed from the moulding station are conveyed to a further operating station. The channel element is shaped in such a way as to advance the caps in a single row.

The channel element comprises two side walls facing one another and projecting transversely from edge portions of a bottom wall. A support wall is provided for supporting the caps. The support wall extends transversely between the two side walls and is arranged parallel to the bottom wall. The support wall is arranged in such a way as to separate a top region, through which the caps are conveyed, and a bottom region that is partially delimited by the bottom wall and by portions of the side walls. An air flow, generated for example by a fan, passes through the bottom region to interact with the caps.

The caps are so arranged that a top wall thereof abuts on the support wall.

On the support wall, triangular openings are obtained through which the air flow, coming from the bottom region, reaches the top region and interacts with the caps.

The triangular openings are uniformly distributed in an advancing direction along which the caps are advanced so that adjacent triangular openings are separated by a preset distance. Deflecting portions associated with the triangular openings project from a bottom side of the support wall that is opposite a top side of the support wall interacting with the caps.

Each deflecting portion directs part of the air flow towards the caps so as to reduce friction between the caps and the top side of the support wall and to move the caps along the advancing direction.

Nozzles are arranged above the channel element to supply pressurized air that promotes advancing of the caps in the advancing direction.

A drawback of the aforementioned apparatus is that it does not advance the caps in an effective manner.

In particular, undesired sticking of the caps may occur when the caps interact with the regions of the support wall that are comprised between two adjacent triangular openings, thus slowing down the conveying operation of the caps. The slowing-down of the conveying operation is even more evident when the caps have just been formed, because they are still hot and thus tend to adhere to the surfaces of the channel element.

An object of the invention is to improve the apparatuses for conveying objects.

A further object of the invention is to provide an apparatus that is able to convey objects, in particular caps, in a fluent and fast manner and that reduces undesired sticking during advancing of the objects.

According to the invention, there is provided an apparatus for conveying objects, comprising conveying plane means arranged for supporting said objects and blowing means arranged for advancing said objects in an advancing direction, characterized in that said conveying plane means is selected from a group comprising rolling means, fluid cushion means.

Owing to the invention, there is provided an apparatus that improves advancing of objects, such as caps, thus preventing the objects from sticking during advancing on the conveying plane means. In particular, rolling means, with which a first embodiment of the apparatus is provided, is able to transform sliding friction between the caps and the conveying plane means of the prior art apparatuses into rolling friction, thus enabling the caps to be advanced easily in the advancing direction.

Fluid cushion means, with which a second embodiment of the apparatus is provided, occupies substantially the whole conveying plane means and provides an upward pushing action that considerably reduces sliding friction between the caps and the conveying plane means of the prior art apparatuses, thus enabling the caps to be advanced easily in the advancing direction.

The invention may be better understood and carried out with reference to the enclosed drawings that show some embodiments thereof by way of non-limitative example,
wherein:
Figure 1 is a longitudinal section of a first embodiment of an apparatus for conveying objects;
Figure 2 is a longitudinal section of a second embodiment of an apparatus for conveying objects;
Figure 3 is a longitudinal section of a third embodiment of an apparatus for conveying objects;
Figure 4 is a section taken along plane IV-IV in Figure 1;
Figure 5 is a section taken along plane V-V in Figure 2.

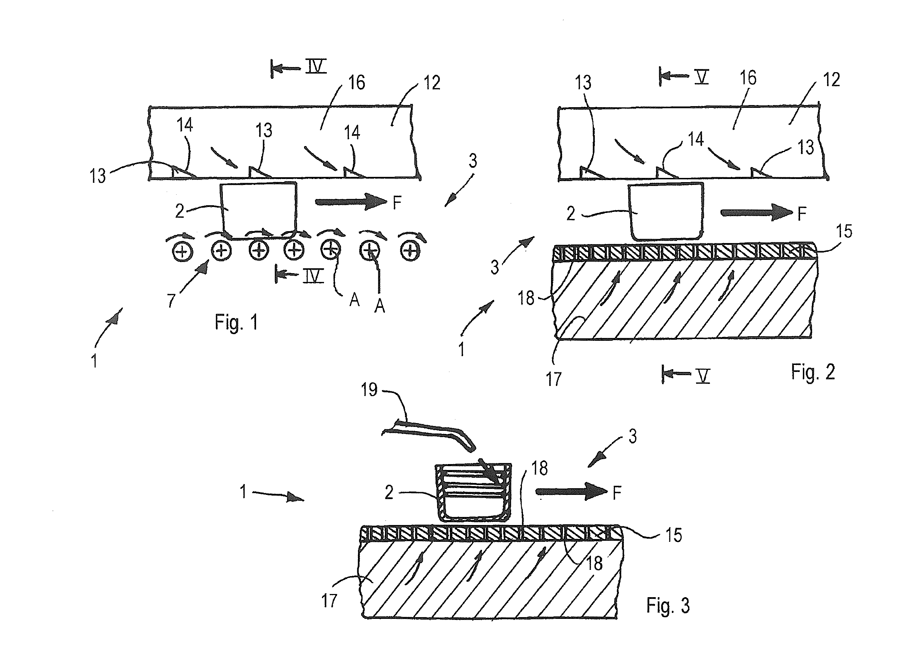

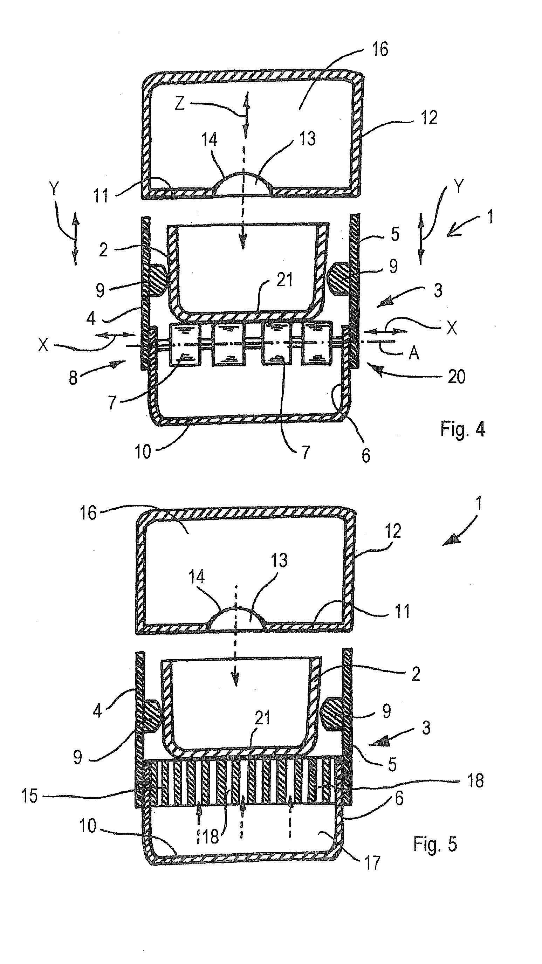

Figures 1 and 4 show a first embodiment of an apparatus 1 for conveying caps 2, comprising a channel element 3 that extends in an advancing direction F along which the caps 2 are advanced.

The caps may be obtained by moulding plastics (for example by injection moulding or by compression moulding), or by forming metal sheets.

In particular the caps may be screw caps made of plastics, or crown caps made of metal.

The channel element 3 comprises a first side wall 4 and a second side wall 5 facing one another. The first side wall 4 and the second side wall 5 are provided with guide elements 9 arranged for laterally guiding the caps 2 in the advancing direction F. A connecting element 6, for example a U-shaped wall, connects the first side wall 4 to the second side wall 5. The connecting element 6 is interposed between an edge portion 8 of the first side wall 4 and a further edge portion 20 of the second side wall 5 so as to define a bottom part of the channel element 3.

The connecting element 6 comprises a transverse portion 10 that is arranged transversely with respect to the first side wall 4 and to the second side wall 5.

A plurality of groups of roller elements 7, for example idle roller elements, is arranged inside the channel element 3, defining a conveying plane for the caps 2. The groups of roller elements 7 support the caps 2 during advancing. The groups of roller elements 7 are positioned between the guide elements 9 and the transverse portion 10.

Each roller element of a group of roller elements 7 is rotatable around an axis A that is arranged transversely to the advancing direction F. Furthermore, the axis A is arranged transversely, and substantially perpendicularly, with respect to the first side wall 4 and the second side wall 5.

The groups of roller elements 7 are distributed along the channel element 3, in the advancing direction F, to reduce friction that is generated when the caps 2 are conveyed. In this way, the caps 2, that are overturned, i.e. with a top wall 21 thereof interacting with the groups of roller elements 7, can advance fluently in the advancing direction F.

The channel element 3 is so shaped that the caps 2 are advanced to form a single row.

The apparatus 1 comprises a blowing element 12, shaped as a hollow box, which is positioned in a zone opposite the groups of roller elements 7 with respect to the guide elements 9.

The blowing element 12 is shaped so as to define a conduit 16 in which an air flow flows.

The air flow may be generated by a fan and, therefore, is not pressurized.

The blowing element 12 comprises a further transverse portion 11 arranged parallel to the transverse portion 10 that faces the groups of roller elements 7. On the further transverse portion 11, a plurality of blowing openings 13 is obtained, through which the air flow comes out from the blowing element 12 to enter the channel element 3.

The blowing openings 13 may be uniformly distributed on the further transverse portion 11 in the advancing direction F.

A deflecting portion 14 is associated with each blowing opening 13 to direct part of the air flow to the exterior of the blowing element 12. Each deflecting portion 14 protrudes inside the blowing element 12 in such a way as to direct the air flow towards the interior of the caps 2 and substantially in the advancing direction F. In this way the caps 2 are pushed by the air flow in the advancing direction F.

The blowing openings 13 may have the shape of a triangle, a vertex of the triangle pointing in the advancing direction F.

In a variant, moving means - not shown - is provided which moves the first side wall 4 and the second side wall 5 with respect to each other transversely to the advancing direction F, as shown by the arrows X in Figure 4, to adjust the width of the channel element 3 so that the channel element 3 may receive caps 2 having different diameters.

In a variant, transferring means - not shown - moves the first side wall 4 and the second side wall 5 with respect to the conveying plane, as shown by the arrows Y in Figure 4, and further transferring means - not shown - moves the blowing element 12 with respect to the conveying plane, as shown by the arrow Z in Figure 4.

The transferring means and the further transferring means adjust the height of the channel element 3 so that the channel element 3 may receive caps 2 having different heights.

The further transferring means also allows the distance between the blowing opening 13 and the conveying plane to be adjusted in order to properly direct the air flow towards the caps 2.

Figures 2 and 5 show a second embodiment of the apparatus 1 which differs from the first embodiment of the apparatus 1 shown in Figures 1 and 4 in that it comprises, instead of the groups of roller elements 7, a supporting element 15 for supporting the caps 2.

The supporting element 15 is arranged parallel to the transverse portion 10 and the further transverse portion 11 and extends between the first side wall 4 and the second side wall 5. A further conduit 17 is defined by the supporting element 15 together with the connecting element 6. A further air flow is made to flow within the further conduit 17, for example by means of a fan. The supporting element 15 is provided with a plurality of further openings 18, for example micro-holes, extending through the thickness of the supporting element 15. The further openings 18 are so shaped and so positioned as to define a porous structure arranged for directing the further air flow, coming from the further conduit 17, towards the caps 2. In this way, a fluid bearing or an air cushion is generated on the supporting element 15 that occupies substantially the whole top side of the supporting element 15, thus effectively pushing upwards the caps 2 and reducing friction between the caps 2 and the supporting element 15. This enables the air flow coming from the blowing element 12 to easily push the caps 2 in the advancing direction F.

The fluid bearing or air cushion cooperates with the supporting element 15 to define a conveying plane on which the caps 2 are advanced.

Owing to the groups of roller elements 7 and to the supporting element 15 that ensure the effective advancing of the caps 2, it is not necessary to use pressurized air in order to push the caps 2.

Hence, the apparatus 1 disclosed with reference to Figures 1, 2, 4 and 5 has simpler structure and reduced power consumption with respect to the prior art apparatuses, since complicated and expensive devices for compressing air, such as compressor devices, are not required. Therefore, the above-disclosed apparatus is more economical than the prior art apparatuses.

Furthermore, the apparatus 1 reduces the noise that in prior art apparatuses is generated by the devices that supply and deliver pressurized air, thus improving the working conditions of operators that work near the apparatus 1.

Figure 3 shows a third embodiment of the apparatus 1 comprising nozzle elements 19 that are arranged above the channel element 3 and are oriented so as to direct pressurized air towards the caps 2 in order to push the caps 2 in the advancing direction F.

The nozzle elements 19 may be reciprocally spaced by a certain distance, thus ensuring the caps 2 are uniformly and effectively pushed in the advancing direction F.

The channel element 3 is provided with a supporting element 15 like the one disclosed with reference to Figures 2 and 5.

In a further embodiment, not shown, the nozzle elements 19 may be associated with groups of roller elements 7 like that of the first embodiment of the apparatus 1 shown in Figures 1 and 3.

## Claims

1. Apparatus for conveying objects (2), comprising conveying plane means arranged for supporting said objects (2) and blowing means (12; 19) arranged for advancing said objects (2) in an advancing direction (F), **characterized in that** said conveying plane means is selected from a group comprising rolling means (7), fluid cushion means.

2. Apparatus according to claim 1, wherein said rolling means comprises roller elements (7) arranged for supporting said objects (2).

3. Apparatus according to claim 2, wherein said roller elements (7) are rotatable around axes (A) that are arranged transversely to said advancing direction (F).

4. Apparatus according to claim 3, wherein said axes (A) are parallel to one another and to said conveying plane means.

5. Apparatus according to claim 1, wherein said fluid cushion means comprises a supporting element (15) provided with opening means (18) arranged for directing an air flow towards said objects (2).

6. Apparatus according to claim 5, wherein said opening means (18) occupies a prevailing part of said conveying plane means.

7. Apparatus according to claims 5, or 6, wherein said opening means comprises micro-holes (18) extending through the thickness of said supporting element (15).

8. Apparatus according to any one of claims 5 to 7, wherein said opening means (18) defines a porous structure arranged for generating an air bearing or fluid cushion for said objects (2).

9. Apparatus according to any one of claims 5 to 8, and further comprising a wall element (6) defining, together with said supporting element (15), a conduit element (17).

10. Apparatus according to any one of claims 1 to 9, and further comprising a first side wall (4) and a second side wall (5) for laterally guiding said objects (2).

11. Apparatus according to claim 10, wherein said first side wall (4) and said second side wall (5) define a channel element (3) along which said objects (2) are advanced so as to form a single row.

12. Apparatus according to claim 10, or 11, and further comprising moving means arranged to move said first side wall (4) and said second side wall (5) with respect to each other transversely to said advancing direction (F).

13. Apparatus according any one of claims 10 to 12, and further comprising further moving means arranged to move said first side wall (4) and said second side wall (5) with respect to said conveying plane means.

14. Apparatus according to any one of claims 10 to 13, and further comprising guide elements (9) arranged on said first side wall (4) and on said second side wall (5) for interacting with said objects (2).

15. Apparatus according to any one of claims 1 to 14, wherein said blowing means comprises a tubular element (12) extending along said advancing direction (F).

16. Apparatus according to claim 15, wherein said tubular element (12) faces said conveying plane means.

17. Apparatus according to claim 15, or 16, wherein said tubular element (12) defines conduit means (16) through which a conveying air flow passes.

18. Apparatus according to claim 17, wherein said conduit means (16) is provided with a plurality of blowing openings (13) arranged for directing said conveying air flow towards said objects (2).

19. Apparatus according to claim 18, wherein blowing openings (13) of said plurality of blowing openings (13) are uniformly distributed along said advancing direction (F).

20. Apparatus according to claim 18, or 19, wherein each blowing opening (13) of said plurality of blowing openings (13) is associated with a deflecting portion (14) arranged for deflecting a part of said conveying air flow outside said tubular element (12) and towards said objects (2).

21. Apparatus according any one of claims 15 to 20, and further comprising further transferring means arranged to move said tubular element (12) with respect to said conveying plane means.

22. Apparatus according to any one of claim 1 to 14, wherein said blowing means comprises nozzle means (19) arranged for directing pressurized air towards said objects (2).

23. Apparatus according to claim 22, wherein said nozzle means comprises a plurality of nozzle elements (19) arranged along said advancing direction (F).

24. Apparatus according to claim 23, wherein nozzle elements of said plurality of nozzle elements (19) are uniformly distributed along said advancing direction (F).

25. Apparatus according to any one of claims 1 to 24, wherein said objects are caps (2).

26. Apparatus according to claim 25, wherein said caps are made of plastics.

27. Apparatus according to claim 25, wherein said caps are made of metal.

28. Apparatus according to any one of claims 25 to 27, wherein said conveying plane means is so configured as to interact with a top wall (21) of said caps (2).
